(19) Europäisches Patentamt
European Patent Office
Office européen des brevets

(11) Publication number : 0 636 658 A1

# (12) EUROPEAN PATENT APPLICATION

(21) Application number : 94304932.0

(22) Date of filing : 05.07.94

(51) Int. Cl.$^6$ : C08L 71/12, C08L 101/00

(30) Priority : 07.07.93 JP 167772/93

(43) Date of publication of application : 01.02.95 Bulletin 95/05

(84) Designated Contracting States : DE FR GB NL

(71) Applicant : SUMITOMO CHEMICAL COMPANY, LIMITED
Kitahama 4-chome 5-33
Chuo-ku Osaka 541 (JP)

(72) Inventor : Nagaoka, Kenji
832-4, Shiizu
Ichihara-shi, Chiba 299-01 (JP)
Inventor : Goto, Satoru
1-2-40, Hirata
Ibaraki-shi, Osaka 567 (JP)

(74) Representative : Bentham, Stephen et al
J.A. KEMP & CO.
14 South Square
Gray's Inn
London WC1R 5LX (GB)

## (54) Thermoplastic resin composition.

(57) Disclosed is a thermoplastic resin composition which comprises the following components (A)-(C), content of the component (C) being 1-50 parts by weight on the basis of 100 parts by weight in total of the components (A) and (B), the component (A) forming a continuous phase and the component (B) being present as a dispersed phase in said continuous phase :

(A) a crystalline thermoplastic resin exclusive of the component (C),
(B) a polyphenylene ether resin, and
(C) an ethylene-α -olefin copolymer having an ethylene content of 50-99 mol%, a density of 0.870-0.935 g/cm$^3$ and a maximum melting peak temperature of 100°C or higher measured by a differential scanning calorimeter (DSC).

The composition is improved in impact resistance with maintaining the characteristics possessed by resin compositions comprising a crystalline thermoplsatic resin and a polyphenylene ether resin.

EP 0 636 658 A1

The present invention relates to a thermoplastic resin composition. More particularly, it relates to a thermoplastic resin composition which comprises a crystalline thermoplastic resin composition, a polyphenylene ether resin and a specific ethylene-α-olefin copolymer resin and which is excellent in stiffness and impact strength.

Crystalline thermoplastic resins represented by polyamides, polyesters and polyphenylene sulfides are superior in mechanical properties, oil resistance and flowability, but have the defects such as large distortion at the time of molding and insufficient heat resistance. As an approach to improve these defects of crystalline thermoplastic resins, blends of crystalline thermoplastic resins with non-crystalline resins have been proposed. As the non-crystalline thermoplastic resins having high heat resistance, polyphenylene ether resins have been widely used. That is, many proposals have been made for blends of crystalline thermoplastic resins with polyphenylene ether resins. For example, Japanese Patent Kokai No. 56-1655 discloses a resin composition comprising a polyphenylene ether and a polyamide, Japanese Patent Kokoku No. 56-34032 discloses a resin composition comprising a polyphenylene ether and a polyphenylene sulfide, Japanese Patent Kokai No. 49-50050 discloses a resin composition comprising a polyphenylene ether and a polyester, and Japanese Patent Kokai No. 63-183954 discloses a resin composition comprising a crystalline thermoplastic resin and a polyphenylene ether and having a specific morphology.

However, these conventional resin compositions are insufficient in impact resistance. For improving the impact resistance, EP 236596 and Japanese Patent Kokai No. 60-44547 propose to add elastomers to the compositions. However, these have the problem that stiffness of the resulting compositions decreases.

The object of the present invention is to provide thermoplastic resin compositions which are improved in impact resistance with maintaining the features of the resin compositions comprising crystalline thermoplastic resins and polyphenylene ether resins, namely, small distortion at the time of molding and excellent oil resistance, heat resistance and stiffness.

The inventors have conducted intensive research on thermoplastic resin compositions comprising a crystalline thermoplastic resin and a polyphenylene ether resin as main resin components and have found that the above problems can be solved in whole or in part by adding a specific ethylene-α-olefin copolymer resin as a third component to the crystalline thermoplastic resin and the polyphenylene ether resin.

The present invention relates to a thermoplastic resin composition comprising the following components (A)-(C), content of the component (C) being 1-50 parts by weight on the basis of 100 parts by weight in total of the components (A) and (B), the component (A) forming a continuous phase and the component (B) being present as a dispersed phase in said continuous phase:

(A) a crystalline thermoplastic resin (exclusive of the component (C)),

(B) a polyphenylene ether resin,

(C) an ethylene-α-olefin copolymer having an ethylene content of 50-99 mol%, a density of 0.870-0.935 $g/cm^3$ and a maximum melting peak temperature of 100°C or higher measured by a differential scanning calorimeter (DSC).

As examples of the crystalline thermoplastic resin (A), mention may be made of polyamides such as polyamide 6, polyamide 66, polyamide 46, and polyamide 12; polyesters such as polyethylene terephthalate, polybutylene terephthalate and polyethylene naphthalate; polyolefins such as polyethylene and polypropylene; polyketones such as poly(oxyphenylenecarbonylphenyleneoxyphenylene) and poly(oxyphenylenecarbonylphenylene); polyarylene sulfides such as polyphenylene sulfide; and polyacetals such as polyoxymethylene. Of these crystalline thermoplastic resins, preferred are polyamides and polyesters. The resin (C) is excluded from the resin (A).

As the polyphenylene ether resin (B), polymers comprising the recurring unit represented by the following formula are preferred.

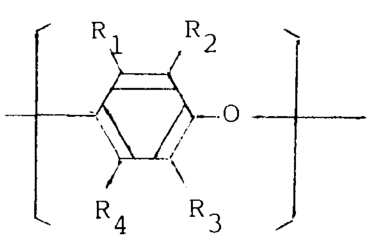

wherein $R_1$-$R_4$ each represents a hydrogen atom, a halogen atom, a substituted or unsubstituted hydrocarbon group or a substituted or unsubstituted hydrocarbon oxy group.

As preferable examples of the substituents in the above substituted hydrocarbon group and substituted

hydrocarbon oxy group, mention may be made of thermally stable groups such as halogen atom, hydroxyl group, amino group, nitro group, cyano group, carboxyl group, amide group, ether group, sulfide group and sulfone group.

Examples of the polyphenylene ether resins comprising the recurring unit represented by the above formula are poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-1,4-phenylene ether), poly(2,6-butyl-1,4-phenylene ether), poly(2,6-dipropenyl-1,4-phenylene ether), poly(2,6-dilauryl-1,4-phenylene ether), poly(2,6-diphenyl-1,4-phenylene ether), poly(2,6-dimethoxy-1,4-phenylene ether), poly(2,6-diethoxy-1,4-phenylene ether), poly(2-methoxy-6-ethoxy-1,4-phenylene ether), poly(2-ethyl- 6-stearyloxy-1,4-phenylene ether), poly(2-methyl-6-phenyl-1,4-phenylene ether), poly(2-methyl-1,4-phenylene ether), poly(2-ethoxy-1,4-phenylene ether), poly(2-chloro-1,4-phenylene ether), poly(3-methyl-6-t-butyl-1,4-phenylene ether), poly(2,6-dichloro-1,4-phenylene ether), poly(2,5-dibromo-1,4-phenylene ether), poly(2,6-dibenzyl-1,4-phenylene ether) and various copolymers containing two or more recurring units which constitute the above enumerated polymers. The copolymers include copolymers of polysubstituted phenols such as 2,3,6-trimethylphenol and 2,3,5,6-tetramethylphenol with 2,6-dimethylphenol.

The polyphenylene ether resin (B) further includes the above polymers or copolymers graft modified with styrene monomers such as styrene and α-methyl-styrene and mixtures of these polymers or copolymers in an amount of at least 20% by weight with polystyrenes.

Of these polyphenylene ether resins, preferred are poly(2,6-dimethyl-1,4-phenylene ether) and a copolymer of 2,6-dimethylphenol with 2,3,6-trimethylphenol.

The molecular weight of the polyphenylene ether resin (B) varies depending on the object and cannot be generically determined, but is normally 0.1-0.7 dl/g, preferably 0.2-0.6 dl/g in terms of intrinsic viscosity measured in chloroform at 30°C.

The polyphenylene ether resin (B) can be obtained by the processes described, for example, in U.S. Pat. Nos. 3306874, 3306875 and 3257357, Japanese Patent Kokoku No. 52-17880, and Japanese Patent Kokai Nos. 50-51197 and 1-304119.

The ethylene-α-olefin copolymer (C) has an ethylene content of 50-99 mol%, a density of 0.870-0.935 g/cm$^3$ and a maximum melting peak temperature of 100°C or higher measured by a differential scanning calorimeter (DSC).

The α-olefins are those of preferably 3-18 carbon atoms, more preferably 4-10 carbon atoms. Examples of the α-olefins are propylene, butene-1, pentene-1, 4-methyl-pentene-1, hexene-1, heptene-1, octene-1, and decene-1. Butene-1 and hexene-1 are preferred. These α-olefins may be used each alone or in combination of two or more.

The ethylene content of (C) is 50-99 mol%, preferably 70-98 mol%. The density of (C) is 0.870-0.935, preferably 0.870-0.920 g/cm$^3$, more preferably 0.870-0.905 g/cm$^3$, most preferably 0.880-0.900 g/cm$^3$. The (C) has a maximum melting peak temperature of 100°C or higher, preferably 110-140°C measured by a differential scanning calorimeter (DSC). Molecular weight of (C) is not critical, but generally 0.2-150 g/10 min, preferably 0.4-50 g/10 min in terms of melt flow (JIS K6760).

The ethylene-α-olefin copolymer (C) can be prepared, for example, by copolymerizing ethylene with an α-olefin at a polymerization temperature of 130-300°C and a polymerization pressure of 300-3000 kg/cm$^2$ in the presence of a transition-metal catalyst.

The ethylene-α-olefin copolymers (C) further include those which are modified with compounds having a polar group. Preferable modified ethylene-α-olefin copolymers are acid-modified ethylene-α-olefin copolymers obtained by graft modifiying ethylene-α-olefin copolymers with modifiers comprising unsaturated compounds having carboxylic acid group or acid anhydride group or precursors which produce the above unsaturated compounds under the grafting conditions mentioned hereinafter. Examples of the modifiers are maleic acid, fumaric acid, maleic anhydride, malic acid and citric acid.

In the thermoplastic resin composition of the present invention, (A) forms a continuous phase and (B) is present as a dispersed phase in the continuous phase. The object of the present invention can be attained only when the composition has such a specific morphology. The dispersed phase formed by (B) has an average particle size of preferably 20 μm or smaller, more preferably 0.05-10 μm, most preferably 0.05-5 μm.

The resin compositions having such morphology can be efficiently obtained by using compatibilizing agents which contributes to improvement of compatibility between crystalline thermoplastic resin and polyphenylene ether, such as maleic anhydride, maleic acid, fumaric acid, itaconic acid, malic acid, citric acid and diphenylmethane diisocyanate which are disclosed, for example, in Japanese Patent Kokai No. 63-183954.

In the thermoplastic resin composition of the present invention, the content of (C) is 1-50 parts by weight, preferably 5-40 parts by weight, more preferably 15-30 parts by weight on the basis of 100 parts by weight in

total of (A) and (B). If the content of (C) is too small, the effect to improve impact resistance is insufficient and if it is too large, stiffness of the resulting thermoplastic resin composition is insufficient.

The proportion of the contents of (A) and (B) in the thermoplastic resin composition may be such that the above-mentioned morphology can be formed, but preferably (A) 25-99 parts by weight and (B) 75-1 part by weight, more preferably (A) 35-90 parts by weight and (B) 65-10 parts by weight.

The thermoplastic resin composition of the present invention can optionally contain fillers. Examples of the fillers are inorganic fibers such as glass fibers, potassium titanate fibers, rock wools and carbon fibers; organic fibers such as aromatic polyamide fibers and polybenzimidazole fibers; metallic fibers such as stainless steel fibers, brass fibers and aluminum-zinc fibers; particles of inorganic compounds such as glass beads, asbestos, wollastonite, mica, talc, clay, calcium carbonate, magnesium hydroxide, silica and diatomaceous earth; metallic particles such as aluminum flake and zinc flake; and particles of organic compounds such as polyimide powder. Preferred are glass fibers. Amount of the fillers is 300 parts by weight or smaller, preferably 200 parts by weight or smaller on the basis of 100 parts by weight in total of (A) and (B).

If necessary, the thermoplastic resin composition of the present invention can further contain other various additives such as flame retarders, stabilizers, plasticizers and lubricants.

Examples of the flame retarders are red phosphorus; phosphates such as triphenyl phosphate, tricresyl phosphate, phosphates obtained from mixtures of isopropylphenol and phenol, and phosphates obtained from mixtures of phosphoric acid, bifunctional phenols such as benzohydroquinone or bisphenol A and other alcohols or phenols; phosphine oxides such as triphenylphosphine oxide; bromide compounds such as decabromobiphenyl, pentabromotoluene, decabromodiphenyl ether, hexabromobenzene, brominated polystyrene and brominated epoxy resin; and nitrogen-containing compounds such as melamine and melamine triisocyanurate.

Examples of the stabilizers are steric hindered phenols, organic phosphites, oxalic acid diazides and steric hindered amines.

Examples of the lubricants are polyethylene wax and paraffin.

Amounts of the additives are determined depending on the object, but the following are usually employed: flame retarder: 30 parts by weight or smaller, preferably 1-20 parts by weight; stabilizer: 20 parts by weight or smaller, preferably 0.001-10 parts by weight; and lubricant: 2 parts by weight or smaller on the basis of 100 parts by weight in total of (A) and (B).

The thermoplastic resin composition of the present invention can be produced by known methods such as solution blending method and melt kneading method. The melt kneading method is preferred. One example of the melt kneading method comprises mixing the components by known mixing means used for mixing resins per se or a resin with liquid or solid additives, such as Henschel mixer, super mixer, ribbon blender and V blender and kneading the resulting homogeneous mixture by kneading means such as Banbury mixer, Plasto mill, Brabender Plastograph, and single-screw or twin-screw extruders. The kneading temperature is usually 150-400°C, preferably 200-350°C.

The thermoplastic resin composition of the present invention is improved in impact resistance with maintaining the characteristics of small distortion in molding and excellent oil resistance, heat resistance and stiffness which are possessed by resin compositions comprising crystalline thermoplastic resins and polyphenylene ether resins. Utilizing these excellent characteristics, the thermoplastic resin composition of the present invention is most suitable as various cases, frames, connectors, switches and other mechanical parts in the electric, electronic and OA fields; magnet flywheels, door mirror stays, lamp reflectors, cylinder head covers, and various gears in the fields of automobiles and vehicles; and various housings, pulleys, and handles in the mechanical fields.

The following examples are merely illustrative of the present invention, and the present invention is not restricted to the examples.

Examples 1-5 and Comparative Examples 1-3

A twin-screw extruder of 50 mm in diameter having upper and lower two feed openings was used. The components (B) and (C) shown in Tables 1 and 2 were fed from the upper feed opening and the component (A) was fed from the lower feed opening and these were melt kneaded at a cylinder temperature of 260°C to obtain a thermoplastic resin composition. The resulting resin composition was subjected to measurement of properties. The results are shown in Tables 1 and 2.

The symbols used in Tables 1 and 2 have the following meanings.

PA1: Polyamide-6 (number-average molecular weight=17000)

PA2: Polyamide 6,6 (relative viscosity=2.36 dl/g)

PPE: Poly(2,6-dimethyl-1,4-phenylene ether) (intrinsic viscosity measured in chloroform at 30°C = 0.46 dl/g)

MAH: Maleic anhydride (compatibilizing agent)

PS: Polystyrene resin (Esbright 8 manufactured by Sumitomo Chemical Co., Ltd.)

RG: Radical generator (CH4 manufactured by Sanken Kako Co., Ltd.)

P1: Ethylene-butene copolymer (content of butene-1 = 7 mol%, density = 0.900 g/cm$^3$, maximum melting peak temperature by DSC = 115°C, melt flow rate = 0.8 g/ 10 min)

P2: Ethylene-hexene copolymer (content of hexene-1 = 3.3 mol%, density = 0.912 g/cm$^3$, maximum melting peak temperature by DSC = 118°C, melt flow rate = 0.8 g/ 10 min)

P3: Ethylene-butene copolymer (content of butene-1 = 3.4 mol%, density = 0.919 g/cm$^3$, maximum melting peak temperature by DSC = 120°C, melt flow rate = 0.8 g/ 10 min)

mP1: Modified ethylene-butene copolymer obtained by modifying P1 with maleic acid in accordance with the following reference example

mP2: Modified ethylene-butene copolymer obtained by modifying P2 with maleic acid in accordance with the following reference example

mP3: Modified ethylene-butene copolymer obtained by modifying P3 with maleic acid in accordance with the following reference example

Q1: A low-density polyethylene containing no α-olefin component (density = 0.921 g/cm$^3$, maximum melting peak temperature by.DSC = 111°C, melt flow rate = 0.3 g/10 min)

mQ1: A modified low-density polyethylene obtained by modifying Q1 with maleic acid in accordance with the following reference example

Q2: Ethylene-propylene copolymer (propylene content = 43 mol%, density = 0.870 g/cm$^3$ having no melting peak by DSC)

mQ2: A modified ethylene-propylene copolymer obtained by modifying Q2 with maleic acid in accordance with the following reference example

mP1, mP2 and mP3 have densities within the range 0.870-0.935g/cm$^3$ and a maximum melting peak temperature of 100°C or higher.

Reference Example (modification with maleic acid)

A mixture comprising 100 parts by weight of ethylene-α-olefin copolymer or low-density polyethylene, 0.7 part by weight of MAH (maleic anhydride) and 1 part by weight of RG (radical generator) was extruded using a 40mmϕ single-screw extruder at a cylinder temperature of 230°C to obtain the corresponding maleic acid-modified products.

Evaluations were conducted in the following manner.

(1) Average particle size of the dispersed phase formed by the polyphenylene ether resin (B):

The resin composition was subjected to trimming, etching with chloroform and vapor deposition of gold to make a sample for observation. The sample was photographed by a scanning electron microscope. The average particle size was calculated by the following formula from the particle size (diameter of corresponding circle) read from the microphotograph.

$$\text{Average particle size} = \Sigma (di^4 \times ni)/ \Sigma(di^3 \times ni),$$

in the above formula, di denotes particle size and ni denotes the number of di.

(2) Impact strength, flexural modulus of elasticity and flexural strength:

These were measured for the test piece of 3.2 mm thick prepared by injection molding in accordance with ASTM D256 and D790. The impact strength is notched Izod impact strength.

Table 1

| | Example 1 | Comparative Example 1 | Example 2 | Comparative Example 2 |
|---|---|---|---|---|
| Composition *1 | | | | |
| (A) | | | | |
| Kind | PA2 | PA2 | PA1 | PA1 |
| Amount | 55 | 55 | 50 | 50 |
| (B) | | | | |
| PPE | 35 | 45 | 30 | 30 |
| MAH | 0.5 | 0.5 | 0.3 | 0.3 |
| PS | 0 | 0 | 0 | 0 |
| RG | 0.5 | 0.5 | 0.1 | 0.1 |
| (C) | | | | |
| Kind | P1 | - | mP1 | mQ2 |
| Amount | 10 | - | 20 | 20 |
| Evaluation | | | | |
| Morphology *2 | M1 | M1 | M1 | M1 |
| Average particle size μm *3 | 0.8 | 0.6 | 0.3 | 0.5 |
| Impact strength kg·cm/cm | 14 | 5 | 76 | 86 |
| Flexural modulus of elasticity $kg/cm^2$ | 23000 | 25400 | 18200 | 16000 |
| Flexural strength $kg/cm^2$ | 900 | 950 | 710 | 620 |

Table 2

| | Example 3 | Example 4 | Example 5 | Comparative Example 3 |
|---|---|---|---|---|
| Composition *1 | | | | |
| (A) | | | | |
| Kind | PA1 | PA1 | PA1 | PA1 |
| Amount | 50 | 50 | 50 | 50 |
| (B) | | | | |
| PPE | 15 | 15 | 15 | 15 |
| MAH | 0.5 | 0.5 | 0.3 | 0.3 |
| PS | 15 | 15 | 15 | 15 |
| RG | 0.1 | 0.1 | 0.1 | 0.1 |
| (C) | | | | |
| Kind | mP1 | mP2 | mP3 | mQ1 |
| Amount | 20 | 20 | 20 | 20 |
| Evaluation | | | | |
| Morphology *2 | M1 | M1 | M1 | M1 |
| Average particle size μm *3 | 0.3 | 0.3 | 0.3 | 0.3 |
| Impact strength kg·cm/cm | 51 | 39 | 23 | 8 |
| Flexural modulus of elasticity $kg/cm^2$ | 22400 | 21800 | 22600 | 23000 |
| Flexural strength $kg/cm^2$ | 800 | 770 | 780 | 800 |

*1 Composition: The numerical values are part by weight and the meanings of the symbols are as afore-mentioned.

*2 Morphology:

M1: A morphology where the crystalline thermoplastic resin (A) forms a continuous phase and the polyphenylene ether resin (B) is present as a dispersed phase in the continuous phase.

*3 Average particle size: Average particle size of the dispersed phase formed by the polyphenylene ether resin (B).

From the above results, the following can be recognized. That is, in all of the Examples which satisfy the requirements of the present invention, the results are satisfactory in all of the evaluated items. On the other hand, the sample of Comparative Example 1 in which the component (C) which is an essential component of the present invention was not used was inferior in impact strength. The sample of Comparative Example 2 where the component (C) having no melting peak by DSC was used was inferior in flexural modulus of elasticity and flexural strength. Furthermore, the sample of Comparative Example 3 where the component (C) containing no α-olefin was used was inferior in impact strength.

As explained above, the present invention provides a thermoplastic resin composition which is improved in impact resistance with maintaining the characteristics of small distortion at the time of molding and excellent oil resistance, heat resistance and stiffness which are possessed by resin compositions comprising a crystalline thermoplastic resin and a polyphenylene ether resin.

## Claims

1. A thermoplastic resin composition which comprises:
   (A) a crystalline thermoplastic resin other than an ethylene-α-olefin copolymer as defined for component (C),
   (B) a polyphenylene ether resin, and
   (C) an ethylene-α-olefin copolymer having an ethylene content of 50-99 mol%, a density of 0.870-0.935 g/cm$^3$ and a maximum melting peak temperature of 100°C or higher measured by a differential scanning calorimeter (DSC),

   the content of component (C) being 1-50 parts by weight on the basis of 100 parts by weight in total of components (A) and (B), component (A) forming a continuous phase and component (B) being present as a dispersed phase in said continuous phase.

2. A thermoplastic resin composition according to claim 1, wherein the average particle size of the dispersed phase formed by component (B) is 20 μm or smaller.

3. A thermoplastic resin composition according to claim 1 or 2, wherein component (A) is a polyamide.

4. A thermoplastic resin composition according to claim 1, 2 or 3 wherein component (B) is poly(2,6-dimethyl-1,4-phenylene ether).

5. A thermoplastic resin composition according to any one of the preceding claims, wherein the component (C) is a modified ethylene-$\alpha$-olefin copolymer.

6. A thermoplastic resin composition according to any one of the preceding claims, wherein the component (C) has a density of 0.870-0.905 $g/cm^3$.

7. A thermoplastic resin composition according to any one of the preceding claims, wherein the average particle size of the dispersed phase formed by the component (B) is 0.05-5 $\mu m$.

8. A thermoplastic resin composition according to any one of the preceding claims in shaped form.

European Patent Office

# EUROPEAN SEARCH REPORT

Application Number
EP 94 30 4932

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y,D | EP-A-0 262 901 (SUMITOMO CHEM CO.)<br>* claims 1,5,6 *<br>* page 5, line 45 - line 53 *<br>--- | 1-8 | C08L71/12<br>C08L101/00 |
| Y | EP-A-0 352 057 (SUMITOMO CHEM CO.)<br>* claim 1 *<br>* page 11, line 60 - page 12, paragraph 5 *<br>--- | 1-8 | |
| X | EP-A-0 379 286 (SUMITOMO CHEM. CO.)<br>* claims 1,4,7-9 *<br>--- | 1,2,4-8 | |
| A | DATABASE WPI<br>Derwent Publications Ltd., London, GB;<br>AN 90-119730<br>& JP-A-2 069 563 (JAPAN SYNTHETIC RUBBER)<br>* abstract *<br>--- | 1-8 | |
| A | DATABASE WPI<br>Derwent Publications Ltd., London, GB;<br>AN 88-122687<br>& JP-A-63 066 249 (JAPAN SYNTHETIC RUBBER)<br>* abstract *<br>----- | 1-8 | TECHNICAL FIELDS SEARCHED (Int.Cl.6)<br>C08L |

The present search report has been drawn up for all claims

| Place of search | Date of completion of the search | Examiner |
|---|---|---|
| THE HAGUE | 16 November 1994 | O'Sullivan, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)